# EUROPÄISCHE PATENTSCHRIFT

(11) **EP 3 357 716 B1**
(45) Veröffentlichungstag und Bekanntmachung des Hinweises auf die Patenterteilung: **30.11.2022**
(21) Anmeldenummer: 18154982.5
(22) Anmeldetag: 02.02.2018
(51) Int. Cl.: B60C 23/04

(54) **SYSTEM ZUR ERMITTLUNG WENIGSTENS EINER FAHRZEUGINFORMATION BEI EINEM FAHRZEUG**
SYSTEM FOR DETERMINING AT LEAST ONE VEHICLE INFORMATION PARAMETER
SYSTÈME DE DÉTERMINATION D'AU MOINS UNE INFORMATION DE VÉHICULE DANS UN VÉHICULE

(30) Priorität: 03.02.2017 DE 102017102155
(43) Veröffentlichungstag der Anmeldung: 08.08.2018
(73) Patentinhaber: Huf Baolong Electronics Bretten GmbH, 75015 Bretten (DE)
(72) Erfinder: OBERBECKMANN, Kai Magnus, 42105 Wuppertal (DE)
(74) Vertreter: Bals & Vogel Patentanwälte PartGmbB

(56) Entgegenhaltungen:
- EP-A2- 1 714 804
- WO-A1-00/47430
- WO-A1-02/068224
- WO-A1-2012/035121
- US-A- 6 087 930
- US-A1- 2006 017 553
- US-A1- 2016 096 403

## Beschreibung

Die vorliegende Erfindung betrifft ein System zur Ermittlung wenigstens einer Fahrzeuginformation bei einem Fahrzeug. Ferner betrifft die Erfindung ein Verfahren zur Ermittlung wenigstens einer Fahrzeuginformation bei einem Fahrzeug.

Es ist aus dem Stand der Technik bekannt, dass Fahrzeuge oft eine aufwendige Sensorik aufweisen, um Fahrzeuginformationen zu ermitteln. Die Fahrzeuginformationen betreffen dabei bspw. Betriebsparameter des Fahrzeuges wie die Geschwindigkeit oder die Fahrtrichtung.

Des Weiteren ist es bekannt, anhand der Fahrzeuginformationen fehlerhafte Zustände des Fahrzeuges zu erkennen. So kann bspw. anhand eines Reifendrucksensors der Reifendruck bei dem Fahrzeug überwacht werden.

Hierzu wird der Reifendrucksensor üblicherweise an dem Reifenventil oder an der Felge eines Rades des Fahrzeuges angebracht.

Nachteilhaft bei den bekannten Lösungen, bei welchen ein Sensor am Rad des Fahrzeuges zur Ermittlung von Fahrzeuginformationen eingesetzt wird, ist die ggf. aufwendige Montage und/oder der eingeschränkte Anwendungsbereich.

Aus der WO 2012/035121 A1 ist bekannt, eine Vorrichtung zur Bestimmung der Position und/oder Ausrichtung einer auf einem Reifen montierten Einheit in einem Radüberwachungssystem vorzusehen, die einen Seitenkraftsensor umfasst, der auf Kräfte anspricht, die auf den jeweiligen Reifen entlang einer seitlichen Achse ausgeübt werden, wobei die Vorrichtung parallel zu einer Achse des Fahrzeugs verläuft, auf dem der Reifen montiert ist.

Die US 6 087 930 A schlägt einen aktiven Transponder mit integriertem Schaltkreis und integrierter Stromversorgung vor, die in oder an einem Fahrzeugreifen angebracht ist. Ein Druck-, Temperatur- und Reifendehnungssensor werden dabei zusammen mit dem Transponder, der Stromversorgung und einer Antenne auf ein Substrat montiert.

Gemäß der Lehre der EP 1 714 804 A2 wird eine Radzustandsbestimmungsvorrichtung vorgeschlagen, welche eine primäre Sensoreinheit und eine sekundäre Sensoreinheit umfasst, die in den Rädern eines Fahrzeuges vorgesehen sind. Dabei erfasst die primäre Sensoreinheit einen Parameter, der den Zustand des Rades anzeigt, und steuert den Betriebsmodus der sekundären Sensoreinheit in Übereinstimmung mit dem erfassten Parameter.

Ferner offenbart die WO 00/47430 A1 eine Reifenüberwachungsvorrichtung und einen überwachten Fahrzeugreifen, bei denen ein Modul Reifeninformationen überwacht, welches von einer Gummilage getragen wird, die an der Innenfläche des Reifens befestigt ist.

Die US 2006/017553 A1 zeigt ein Sensorgehäuse-System sowie ein Verfahren. Dabei ist ein Quarzsensorgehäuse umfasst, das von einem Verguss-Material eingekapselt ist. Ein akustisches Oberflächenwellensensorelement sowie eine oder mehrere Klebeflächen können dabei in das Sensorgehäuse integriert werden.

Aus der WO 02/068224 A1 ist bekannt, eine Kombination einer Überwachungsvorrichtung mit einem Reifen bereitzustellen, bei der eine Antenne an einem von der Überwachungsvorrichtung beanstandeten Ort am Reifen angebracht ist.

Schließlich offenbart die US 2016/096403 A1 ein Verfahren zur Reifenpositionierung. Daei werden von vier Reifen wir Signale drahtlos gesendet, die von einem Signalempfänger empfangen werden. Jedes Signal enthält dabei eine einachsige Beschleunigung. Der dem Empfänger nächstliegende Reifen wird anhand der Funksignalintensität ermittelt.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, die Montage eines Sensors am Rad des Fahrzeuges zu vereinfachen und/oder die Einsatzmöglichkeiten zu erweitern. Insbesondere soll dabei der Kostenaufwand und/oder Platzaufwand bei der Montage des Sensors verringert werden.

Die voranstehende Aufgabe wird gelöst durch ein System mit den Merkmalen des Anspruchs 1 und durch ein Verfahren mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein System zur Ermittlung wenigstens einer Fahrzeuginformation bei einem Fahrzeug. Das System umfasst dabei wenigstens einen der nachfolgenden Komponenten:
- wenigstens eine Sensoreinheit, welche jeweils (direkt) an (wenigstens) einem Reifen (für das Fahrzeug bzw. eines Rades des Fahrzeuges) befestigbar ist und/oder befestigt ist, sodass vorzugsweise durch die wenigstens eine Sensoreinheit wenigstens ein Erfassungswert (durch eine Erfassung, insbesondere Messung, durch die Sensoreinheit) ermittelbar ist,
- wenigstens eine Auswertevorrichtung zur Auswertung des wenigstens einen (ermittelten) Erfassungswertes, sodass ein Auswertungsergebnis der Auswertung für die Fahrzeuginformation spezifisch ist.

Hierbei ist insbesondere vorgesehen, dass der wenigstens eine Erfassungswert für wenigstens eine Erfassungsgröße am Reifen spezifisch ist, bspw. für eine Beschleunigung des Reifens und/oder Rads und/oder Fahrzeuges und/oder für einen Reifendruck. Ferner umfasst dabei die Sensoreinheit eine Übertragungsvorrichtung, um den wenigstens einen (ermittelten) Erfassungswert an die Auswertevorrichtung zu übertragen.

Es kann dabei möglich sein, dass mehrere Sensoreinheiten am Fahrzeug vorgesehen sind, bspw. eine oder zwei Sensoreinheiten pro Rad bzw. Reifen des Fahrzeuges. Insbesondere ist lediglich eine Auswertevorrichtung vorgesehen, welche die Erfassungswerte (bspw. über eine Datenübertragung) von jeder der Sensoreinheiten empfängt. Bspw. ist dabei die Auswertevorrichtung Teil einer Fahrzeugelektronik, insbesondere einer zentralen Fahrzeugelektronik.

Vorzugsweise ist dabei das Fahrzeug als ein Kraftfahrzeug und/oder Elektrofahrzeug und/oder Personenkraftfahrzeug und/oder Lastkraftfahrzeug und/oder Hybridfahrzeug und/oder autonomes (selbstfahrendes) Fahrzeug ausgeführt. Bevorzugt umfasst dabei das Fahrzeug wenigstens zwei oder wenigstens drei oder wenigstens vier Räder, welche insbesondere jeweils einen Reifen (Pneu oder Mantel) und eine Felge aufweisen. Bspw. kann dabei die Sensoreinheit an jedem der Räder des Fahrzeuges oder auch nur an einigen oder an einem einzigen Rad des Fahrzeuges angeordnet sein.

Es ist ferner denkbar, dass die Sensoreinheit baulich getrennt von der Auswertevorrichtung ausgeführt ist. Insbesondere ist die Sensoreinheit am Rad des Fahrzeuges, insbesondere (direkt) am Reifen, angeordnet, wohingegen bspw. die Auswertevorrichtung außerhalb des Rads angeordnet ist. Es kann daher möglich sein, dass eine Informationsübertragung zwischen der Sensoreinheit und der Auswertevorrichtung (insbesondere ausschließlich) durch die Übertragungsvorrichtung erfolgt, wobei bevorzugt die Informationsübertragung kontaktlos (bspw. über Funk) erfolgt.

Insbesondere ist es dabei vorgesehen, dass die Sensoreinheit nicht am Reifenventil oder an der Felge des Rades des Fahrzeuges angebracht wird, sondern direkt am (Gummi-)Reifen (Reifenmantel), vorzugsweise durch Vulkanisieren auf einer Innenseite des Reifenmantels. Dies hat den Vorteil, dass eine sichere Montage möglich ist und ferner Bauraum für die Sensoreinheit reduziert werden kann.

Insbesondere dient dabei die Erfassung der Sensoreinheit am Reifen dazu, wenigstens eine Fahrzeuginformation zu ermitteln. Diese Fahrzeuginformation ist bspw. eine Montageinformation und umfasst entsprechend z. B. Informationen über die Montage und/oder Lokalisierung der Räder und/oder Reifen am Fahrzeug. Weiter kann es möglich sein, dass die Fahrzeuginformation eine Information über eine Fahrtrichtung (bspw. des Fahrzeuges und/oder des Rads) und/oder eine Information über eine Drehrichtung wenigstens eines Reifen und/oder Rads am Fahrzeug umfasst. Somit kann es anhand der Fahrzeuginformationen möglich sein, die richtige Montage des Reifens (mit der Sensoreinheit) und/oder des Rads am Fahrzeug zu prüfen, insbesondere in Bezug auf die Montageposition (d. h. z. B. vorne, hinten, links oder rechts am Fahrzeug). Des Weiteren kann es auch möglich sein, dass die Fahrzeuginformation Informationen über zumindest einen Reifendruck umfasst. Damit ist eine umfassende Überwachung von sicherheitsrelevanten Parametern am Fahrzeug durch die Fahrzeuginformationen möglich.

Insbesondere ist es denkbar, dass zur Auswertung (durch die Auswertevorrichtung) Informationen und/oder Werte, bspw. Fahrzeugparameter oder dergleichen, aus einem Datenspeicher des Fahrzeuges ausgelesen werden, um so durch die Auswertung (bspw. durch einen Vergleich der Fahrzeugparameter mit den Erfassungswerten) die Fahrzeuginformation zu bestimmen. Die Fahrzeugparameter umfassen dabei bspw. Informationen über einen Fahrzeugaufbau und/oder über einen Betrieb des Fahrzeuges. Alternativ kann auch (bspw. für einige der Fahrzeuginformationen) auf das Auslesen der Fahrzeugparameter verzichtet werden. Bspw. kann dann eine Lokalisation der Sensoreinheiten am Fahrzeug auch ausschließlich anhand der Erfassungswerte erfolgen. Bspw. umfasst die Auswertung durch die Auswertevorrichtung dann eine Berechnung, um anhand der Erfassungswerte (bspw. auch Beschleunigungswerte) die Lokalisation durchzuführen.

In einer weiteren Möglichkeit kann vorgesehen sein, dass die wenigstens eine Sensoreinheit durch Vulkanisation direkt am Reifen, insbesondere an einem Reifenmantel, befestigt ist, vorzugsweise im Bereich und/oder an einer Mantelinnenfläche und/oder im Bereich und/oder an einer Innenisolierung des Reifens. Insbesondere erfolgt dabei die Vulkanisation derart, dass unter Einfluss von Zeit und/oder Temperatur und/oder Druck die Sensoreinheit zumindest teilweise form- und/oder kraft- und/oder stoffschlüssig mit dem Reifen verbunden wird. Bevorzugt erfolgt die Befestigung der Sensoreinheit am Reifen unlösbar und/oder drehfest in Bezug auf eine Drehbewegung des Reifens (d. h. die Sensoreinheit dreht sich mit). Insbesondere kann es dabei möglich sein, dass die Befestigung der Sensoreinheit am Reifen ausschließlich am Reifenmantel erfolgt, vorzugsweise ohne Kontakt zur Felge des Rads und/oder ohne Kontakt zum Reifenventil. Dies hat den Vorteil, dass eine besonders sichere und einfache Befestigung der Sensoreinheit erfolgt.

Ein weiterer Vorteil kann im Rahmen der Erfindung erzielt werden, wenn die Übertragungsvorrichtung zur Funkübertragung und/oder drahtlosen Übertragung (insbesondere des wenigstens einen Erfassungswertes an die Auswertevorrichtung) ausgeführt ist. Insbesondere ist dabei die Übertragungsvorrichtung in die Sensoreinheit integriert und/oder mit einem Energiespeicher der Sensoreinheit elektrisch verbunden. Die Übertragung erfolgt dabei insbesondere passiv oder aktiv, wobei insbesondere bei der passiven Übertragung kein Energiespeicher (wie ein Akkumulator oder eine Batterie) der Sensoreinheit notwendig ist. In diesem Fall wird die Energie zum Betreiben der Übertragungsvorrichtung von außerhalb der Sensoreinheit bereitgestellt, bspw. durch eine induktive Übertragung. Dies hat den Vorteil, dass die Sensoreinheit einen kompakten und kostengünstigen Aufbau aufweisen kann.

Es ist ferner denkbar, dass die Sensoreinheit energiespeicherlos und/oder batterielos ausgeführt ist, und/oder durch die Sensoreinheit eine Energiegewinnung aus der Umwelt der Sensoreinheit erfolgt. Insbesondere kann hierzu Energy Harvesting durch die Sensoreinheit eingesetzt werden, um bspw. aus der Umgebungstemperatur und/oder der Bewegung des Reifens Energie für den Betrieb der Sensoreinheit zu erhalten. Zur Bereitstellung der Energieversorgung und/oder zur Energieumwandlung umfasst die Sensoreinheit bspw. wenigstens einen piezoelektrischen Kristall und/oder wenigstens einen thermoelektrischen Generator und/oder wenigstens eine Antenne und/oder wenigstens eine Photovoltaikvorrichtung. Dies ermöglicht einen besonders kostengünstigen Aufbau der Sensoreinheit, wobei zudem die Zuverlässigkeit beim Betrieb der Sensoreinheit erhöht wird. Insbesondere kann somit auf einen Batteriewechsel verzichtet werden.

Erfindungsgemäß ist vorgesehen, dass die Sensoreinheit als ein Reifendrucksensor ausgeführt ist, welcher ein Beschleunigungssensorelement zur Erfassung einer Beschleunigung, insbesondere bei einer Drehbewegung eines Rads mit dem Reifen und/oder bei einer Bewegung des Fahrzeuges, aufweist. Mit anderen Worten kann das Beschleunigungssensorelement die Beschleunigung bei dem Fahrzeug und/oder bei dem Rad erfassen, an welchem der Reifen mit der Sensoreinheit angebracht ist. Insbesondere erfasst dabei das Beschleunigungssensorelement eine Bewegungsänderung der Fahrtbewegung des Fahrzeuges und/oder der Drehbewegung des Rads. Dies hat den Vorteil, dass lediglich eine einzige Sensoreinheit notwendig ist, um sowohl die Beschleunigung als auch den Druck bei dem Reifen zu erfassen. Insbesondere kann dabei die Sensoreinheit mit dem Beschleunigungssensorelement und/oder mit einem Reifendrucksensorelement als ein Bauteil ausgeführt sein, insbesondere als ein einzeln handhabbares Bauteil und/oder als eine Elektronikeinheit.

Optional ist es denkbar, dass die wenigstens eine Sensoreinheit dazu ausgeführt ist, wenigstens eine der nachfolgenden Erfassungen am Reifen und/oder Rad des Fahrzeuges zur Ermittlung des wenigstens einen Erfassungswertes durchzuführen:
- Reifendruckerfassung, insbesondere durch wenigstens ein Reifendrucksensorelement der Sensoreinheit, welches insbesondere in direktem Kontakt mit dem Reifen (Mantel) steht, um vorzugsweise einen Reifendruck des Reifens mit der Sensoreinheit zu erfassen,
- Beschleunigungserfassung, insbesondere durch wenigstens ein Beschleunigungssensorelement der Sensoreinheit, wobei insbesondere eine Beschleunigung des Fahrzeuges und/oder des Rads (in Bezug auf eine Drehbewegung und/oder auf eine Linearbewegung und/oder in Bezug auf eine Bewegung des Fahrzeuges) erfasst wird,
- Drehrichtungserfassung, insbesondere durch ein Drehsensorelement und/oder ein Beschleunigungssensorelement der Sensoreinheit, insbesondere einer Drehrichtung des Rads und/oder Reifens mit der Sensoreinheit,
- Drehwinkelerfassung, insbesondere durch ein Drehsensorelement der Sensoreinheit,
- Fahrtrichtungserfassung, insbesondere durch ein Drehsensorelement und/oder ein Beschleunigungssensorelement der Sensoreinheit, insbesondere zur Erfassung der Fahrtrichtung des Fahrzeuges,
- Temperaturerfassung, insbesondere durch ein Temperatursensorelement der Sensoreinheit, insbesondere zur Erfassung einer Reifentemperatur und/oder Umgebungstemperatur,
- Vibrationserfassung, insbesondere durch ein Beschleunigungssensorelement der Sensoreinheit.

Insbesondere kann dabei die Sensoreinheit mit dem Beschleunigungssensorelement und/oder mit dem Reifendrucksensorelement und/oder mit dem Drehsensorelement und/oder mit dem Temperatursensorelement und/oder mit einem Richtungssensor und/oder mit der Übertragungsvorrichtung als ein Bauteil ausgeführt sein, insbesondere als ein einzeln handhabbares Bauteil und/oder als eine Elektronikeinheit. Dies hat den Vorteil, dass kostengünstig und platzsparend eine Vielzahl an Erfassungen durch die Sensoreinheit durchgeführt werden können.

Es kann optional möglich sein, dass die wenigstens eine Sensoreinheit einen Energiespeicher und eine Ladezustandsvorrichtung umfasst, wobei insbesondere die Ladezustandsvorrichtung elektrisch mit dem Energiespeicher verbunden ist, sodass vorzugsweise ein unzureichender Ladezustand des Energiespeichers durch die Ladezustandsvorrichtung erfassbar und/oder an die Auswertevorrichtung signalisierbar ist. Bspw. kann hierzu die Ladezustandsvorrichtung eine Information über den Ladezustand des Energiespeichers durch eine Datenübertragung an die Auswertevorrichtung übertragen, bspw. über die Übertragungsvorrichtung der Sensoreinheit. Damit kann ein zuverlässiger und sicherer Betrieb der Sensoreinheit gewährleistet werden.

Optional ist es denkbar, dass wenigstens zwei oder drei oder vier Sensoreinheiten an jeweils unterschiedlichen Reifen für das Fahrzeug befestigt sind, sodass durch die jeweiligen Sensoreinheiten für den jeweiligen Reifen reifenspezifische Erfassungswerte ermittelbar und/oder durch die Auswertevorrichtung auswertbar sind. Insbesondere können somit die Erfassungswerte von unterschiedlichen Reifen (und/oder Rädern) verglichen werden, welche durch die jeweiligen Sensoreinheiten der jeweiligen Reifen (bzw. Räder) erfasst werden. Auf diese Weise können die unterschiedlichen Erfassungswerte kombiniert und/oder verglichen werden, insbesondere durch die Auswertevorrichtung, um die wenigstens eine Fahrzeuginformation zu bestimmen. Somit kann bspw. eine Fahrtrichtung des Fahrzeuges als Fahrzeuginformation bestimmt werden und/oder die Montage der Reifen als Fahrzeuginformation bestimmt werden, insbesondere durch einen Vergleich mit einer vorgegebenen Montage (als Fahrzeugparameter). Entsprechend wird der Vorteil erzielt, dass durch die Auswertung von Erfassungswerten unterschiedlicher Sensoreinheiten an unterschiedlichen Reifen wenigstens eine Fahrzeuginformation ermittelt werden kann, welche für das gesamte Fahrzeug spezifisch ist.

In einer weiteren Möglichkeit kann vorgesehen sein, dass wenigstens zwei oder drei oder vier Sensoreinheiten an einem einzigen Reifen befestigt sind, insbesondere jeweils direkt am Reifen, vorzugsweise an zwei gegenüberliegenden Seiten des Reifens, bevorzugt zum Ausgleich einer Masseverteilung des Reifens, sodass eine Unwucht am Reifen vermeidbar oder verringerbar ist. Hierdurch kann die Zuverlässigkeit beim Betrieb des Fahrzeuges deutlich erhöht werden. Anstelle von einer weiteren Sensoreinheiten bei einem ("1") Reifen kann zumindest ein gleich schweres Ausgleichsgewicht zu der einen Sensoreinheit vorgesehen sein.

Gemäß einer vorteilhaften Weiterbildung der Erfindung kann vorgesehen sein, dass die wenigstens eine Sensoreinheit unlösbar am Reifen befestigt ist, insbesondere drehfest und/oder stoffschlüssig. Hierdurch wird eine sichere Befestigung der Sensoreinheit am Reifen ermöglicht.

Optional kann es vorgesehen sein, dass der Reifen eine Laufrichtungsbindung aufweist, insbesondere ein laufrichtungsgebundenes Profil, aufweist. Mit anderen Worten ist es bei einem solchen Reifen vorgegeben, auf welcher Fahrzeugseite (d. h. linksseitig oder rechtsseitig am Fahrzeug) und/oder mit welcher Ausrichtung der Reifen am (bzw. relativ zum) Fahrzeug montiert werden muss. Insbesondere ist bei laufrichtungsgebundenen Reifen die Laufrichtung für die Vorwärtsfahrt (des Fahrzeuges) vorgegeben. Bspw. ist bei solchen Reifen das Profil des Reifens V-förmig angeordnet. Insbesondere sollte bei solchen Reifen ein Tausch der Räder über Kreuz beim Reifenwechsel vermieden werden. Es kann nun möglich sein, dass anhand der Auswertung der Erfassungswerte bestimmt wird, auf welcher Fahrzeugseite der Reifen mit der Sensoreinheit montiert wurde. Bspw. kann eine solche Bestimmung auch für sämtliche Reifen des Fahrzeuges durchgeführt werden (sofern diese Reifen die Sensoreinheit aufweisen). Dies hat den Vorteil, dass eine fehlerhafte Montage erkannt werden kann.

Bspw. kann es vorgesehen sein, dass der Reifen ein asymmetrisches Profil aufweist, sodass der Reifen für eine Montage am Fahrzeug angepasst ist, bei welcher eine vorgegebene Innenseite des Reifens fahrzeugseitig (karosseriezugewandt) und eine vorgegebene Außenseite des Reifens fahrzeugabgewandt (karosserieabgewandt) angeordnet ist. Insbesondere ist dabei an der Innenseite des Reifens auch die Innenschulter des Reifens und an der Außenseite des Reifens auch die Außenschulter des Reifens angeordnet. Unter fahrzeugseitig bzw. fahrzeugabgewandt wird in diesem Fall eine Richtung in Bezug auf das Fahrzeug ohne die Reifen verstanden. Hierdurch ergibt sich der Vorteil, dass eine fehlerhafte Montage zuverlässig erkannt werden kann.

Erfindungsgemäß ist vorgesehen, dass die wenigstens eine Sensoreinheit richtungsgebunden am Reifen angeordnet ist, sodass eine Fehlmontage des Reifens am Fahrzeug durch die Sensoreinheit erfassbar ist. Insbesondere kann es dabei möglich sein, dass die Sensoreinheit an der Innenseite des Reifens (d. h. ggf. fahrzeugseitig) oder an der Außenseite des Reifens (d. h. ggf. fahrzeugabgewandt) am Reifen angeordnet ist. Insbesondere kann es dabei möglich sein, dass anhand der Auswertung eine fehlerhafte Montage erkannt wird, und/oder bei Erkennung der fehlerhaften Montage eine Warnmeldung z. B. an einen Benutzer des Fahrzeuges ausgegeben wird. Hierdurch lässt sich die Zuverlässigkeit beim Betrieb des Fahrzeuges deutlich erhöhen.

Von weiterem Vorteil kann vorgesehen sein, dass die wenigstens eine Sensoreinheit eine Befestigungsstruktur, insbesondere eine Gitterstruktur und/oder Faserstruktur und/oder Netzstruktur, aufweist, wobei die Sensoreinheit im Wesentlichen durch die Befestigungsstruktur am Reifen befestigbar und/oder montierbar ist. Insbesondere dient die Befestigungsstruktur dabei zur form- und/oder kraft- und/oder stoffschlüssigen Verbindung mit dem Reifen, bspw. durch Vulkanisation. Dabei kann es möglich sein, dass die Befestigungsstruktur neben der Befestigungsfunktion noch eine weitere Funktion der Sensoreinheit umfasst, bspw. eine Funktion als Antenne zur Übertragung der Erfassungswerte. Hierdurch wird eine sichere Befestigung am Reifen möglich und/oder die Übertragung der Daten von der Sensoreinheit an die Auswertevorrichtung durch die Übertragungsvorrichtung verbessert.

Des Weiteren ist es im Rahmen der Erfindung optional möglich, dass eine Befestigungsstruktur der wenigstens einen Sensoreinheit als Antenne der Übertragungsvorrichtung der Sensoreinheit ausgeführt ist, insbesondere zur Übertragung des wenigstens einen Erfassungswertes, und vorzugsweise elektrisch mit wenigstens einer elektrischen Komponente der Sensoreinheit verbunden ist. Damit kann bspw. Bauraum für eine separate Antenne eingespart werden.

Ein weiterer Vorteil kann im Rahmen der Erfindung erzielt werden, wenn die Übertragungsvorrichtung wenigstens eine der nachfolgenden Kommunikationseinheiten zur Übertragung des wenigstens einen Erfassungswertes an die Auswertevorrichtung umfasst:
- eine NFC-Kommunikationseinheit, sodass die Übertragung des wenigstens einen Erfassungswertes über eine NFC-Kommunikation erfolgt,
- eine Bluetooth-Kommunikationseinheit, sodass die Übertragung des wenigstens einen Erfassungswertes über Bluetooth erfolgt,
- eine Funk- und/oder WLAN-Kommunikationseinheit, sodass die Übertragung des wenigstens einen Erfassungswertes über Funk und/oder WLAN erfolgt,
- eine Mobilfunk-Kommunikationseinheit, sodass die Übertragung des wenigstens einen Erfassungswertes über eine Mobilfunkverbindung erfolgt.

Hierdurch wird eine sichere und zuverlässige Übertragung gewährleistet.

Ebenfalls Gegenstand der Erfindung ist ein Verfahren zur Ermittlung wenigstens einer Fahrzeuginformation bei einem Fahrzeug, mit wenigstens einer Sensoreinheit, welche jeweils (insbesondere direkt) an wenigstens einem Reifen für das Fahrzeug befestigt wird, und wenigstens einer Auswertevorrichtung.

Hierbei ist insbesondere vorgesehen, dass zumindest einer der nachfolgenden Schritte durchgeführt wird, wobei vorzugsweise die Schritte nacheinander oder in beliebiger Reihenfolge durchgeführt werden, wobei bevorzugt einzelne Schritte auch wiederholt durchgeführt werden können:
a) Ermitteln von wenigstens einem Erfassungswert, insbesondere einer Vielzahl an Erfassungswerten, durch die wenigstens eine Sensoreinheit, wobei der wenigstens eine Erfassungswert für wenigstens eine Erfassungsgröße (bspw. einem Reifendruck und/oder einer Beschleunigung) am Reifen spezifisch ist,
b) Übertragen des wenigstens einen (ermittelten) Erfassungswertes an die Auswertevorrichtung,
c) Auswerten des wenigstens einen (übertragenen) Erfassungswertes durch die Auswertevorrichtung, sodass vorzugsweise ein Auswertungsergebnis der Auswertung für die Fahrzeuginformation spezifisch ist.

Bspw. ist das Auswertungsergebnis dadurch für die Fahrzeuginformation spezifisch, dass anhand des Auswertungsergebnisses der Reifendruck des Reifens bzw. die Reifendrücke der Reifen bestimmt werden oder eine Fehlmontage des Reifens bzw. der Reifen detektiert werden kann. Damit bringt das erfindungsgemäße Verfahren die gleichen Vorteile mit sich, wie sie ausführlich mit Bezug auf ein erfindungsgemäßes System beschrieben worden sind.

Zudem kann das erfindungsgemäße Verfahren geeignet sein, ein erfindungsgemäßes System zu betreiben.

Insbesondere kann es möglich sein, dass an jedem Reifen des Fahrzeuges wenigstens eine Sensoreinheit vorgesehen und/oder befestigt ist, sodass für jeden der Reifen reifenspezifische Erfassungswerte erfassbar und/oder über eine jeweilige Übertragungsvorrichtung an die Auswertevorrichtung übertragbar sind. Dies hat den Vorteil, dass sehr komplexe Fahrzeuginformationen, bspw. über eine Montage der Räder des Fahrzeuges, bestimmt werden können.

Vorteilhafterweise kann im Rahmen der Erfindung vorgesehen sein, dass durch die Auswertung der Auswertevorrichtung anhand des wenigstens einen Erfassungswertes einer jeweiligen Sensoreinheit eine Information über eine Beschleunigungs- und/oder Dreh- und/oder Fahrtrichtung des Fahrzeuges und/oder des Reifens bestimmt wird, an welchem die jeweilige Sensoreinheit befestigt ist. Bspw. kann es auch möglich sein, dass bei der Auswertung die Erfassungswerte und/oder Beschleunigungs- und/oder Dreh- und/oder Fahrtrichtungsinformationen des jeweiligen Reifens mit den entsprechenden Informationen von anderen Reifen des Fahrzeuges verglichen werden. Auf diese Weise können auch komplexe Fahrzeuginformationen bestimmt werden, wie bspw. eine Information über eine Fortbewegung des Fahrzeuges und/oder über eine Fahrtrichtung des Fahrzeuges oder dergleichen.

Des Weiteren ist es im Rahmen der Erfindung optional möglich, dass bei der Auswertung der Auswertevorrichtung, insbesondere anhand einer Information über eine Beschleunigungs- und/oder Dreh- und/oder Fahrtrichtung wenigstens einer der Reifen des Fahrzeuges, die Fahrzeuginformation bestimmt wird, wobei die Fahrzeuginformation für eine Anordnung der Reifen am Fahrzeug spezifisch ist, sodass eine Reifenmontage bewertbar ist. Dies hat den Vorteil, dass bspw. bei einer fehlerhaften Reifenmontage ein Warnhinweis ausgegeben werden kann.

Erfindungsgemäß ist vorgesehen, dass anhand der Auswertung der Auswertevorrichtung eine Reifenmontage bewertbar ist, und in Abhängigkeit von der Bewertung ein Warnhinweis ausgegeben wird, sodass bei fehlerhafter Montage der Reifen am Fahrzeug ein Benutzer des Fahrzeuges auf die fehlerhafte Montage hingewiesen wird. Bspw. kann dabei der Warnhinweis über eine Anzeigevorrichtung, bspw. einer Instrumententafel des Fahrzeuges, und/oder einer Mittelkonsole des Fahrzeuges, ausgegeben werden. Bevorzugt kann zusätzlich ein Signalton ausgegeben werden, um zu gewährleisten, dass der Benutzer des Fahrzeuges vor Fahrtantritt auf die fehlerhafte Montage hingewiesen wird.

Vorteilhaft ist es zudem, wenn bei der Auswertung der Auswertevorrichtung die Fahrzeuginformation, insbesondere eine Montageinformation der Reifen, mit einer Vorgabe verglichen wird, insbesondere mit einer vorgegebenen Reifenmontage, um insbesondere eine Bewertung der Reifenmontage durchzuführen. Bspw. kann die Vorgabe in einem persistenten Datenspeicher des Fahrzeuges gespeichert sein, um zuverlässig und dauerhaft ausgelesen werden zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Draufsicht auf ein Fahrzeug mit einem erfindungsgemäßen System,
- Figur 2: eine schematische Ansicht eines Hecks des Fahrzeuges,
- Figur 3: eine schematische Schnittansicht eines Reifens,
- Figur 4: eine weitere schematische Schnittansicht eines Reifens,
- Figuren 5+6: schematische Darstellungen einer Sensoreinheit und
- Figur 7: eine weitere schematische Darstellung eines Aufbaus einer Sensoreinheit.

In den nachfolgenden Figuren werden für die gleichen technischen Merkmale auch von unterschiedlichen Ausführungsbeispielen die identischen Bezugszeichen verwendet.

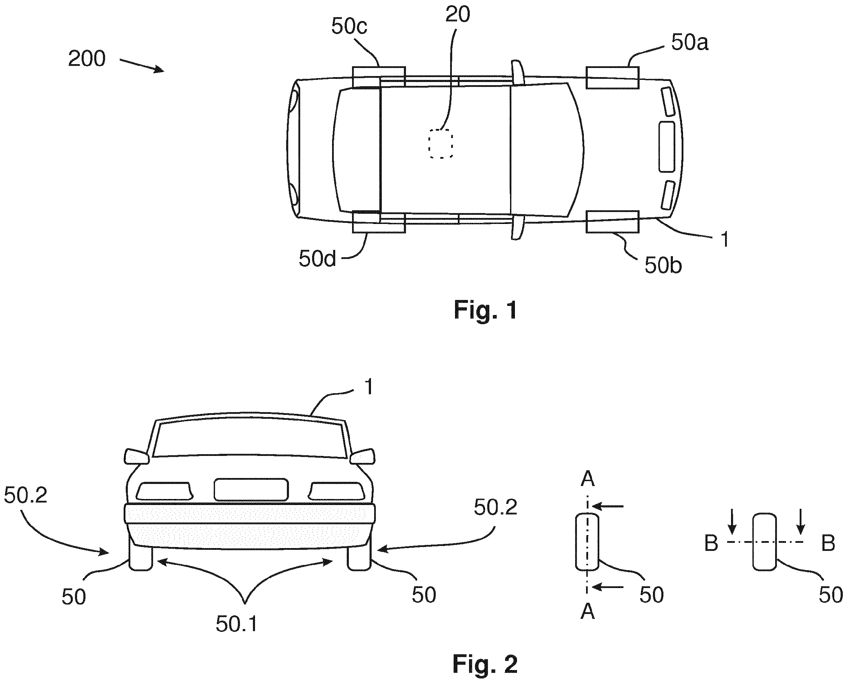

In Figur 1 ist schematisch ein Fahrzeug 1 in einer Draufsicht dargestellt, wobei das Fahrzeug 1 ein erfindungsgemäßes System 200 umfasst. Dabei ist eine Auswertevorrichtung 20 im Fahrzeug 1 vorgesehen, um die Erfassungswerte für unterschiedliche Reifen 50 zu empfangen und/oder auszuwerten. Es ist weiter dargestellt, dass das Fahrzeug 1 einen ersten Reifen 50a (linksseitig und vorne), einen zweiten Reifen 50b (rechtsseitig und vorne), einen dritten Reifen 50c (linksseitig und hinten) und einen vierten Reifen 50d (rechtsseitig und hinten) aufweist.

In Figur 2 wird schematisch eine Heckansicht des Fahrzeuges 1 dargestellt, wobei außerdem eine Innenseite 50.1 und eine Außenseite 50.2 der Reifen 50 gekennzeichnet sind. Die Außenseite 50.2 ist dabei fahrzeug- bzw. karosserieabgewandt und die Innenseite 50.1 ist insbesondere fahrzeug- bzw. karosseriezugewandt. Oft wird dabei bei einer Montage der Reifen 50 einer korrekten Ausrichtung der Reifen 50 Beachtung geschenkt, sodass die Innenseite 50.1 der Reifen 50 stets fahrzeug- bzw. karosseriezugewandt montiert wird.

Des Weiteren ist in Figur 2 eine Schnittebene A-A sowie eine weitere Schnittebene B-B an einem (rechtsseitigen) Reifen 50 des Fahrzeuges 1 gekennzeichnet.

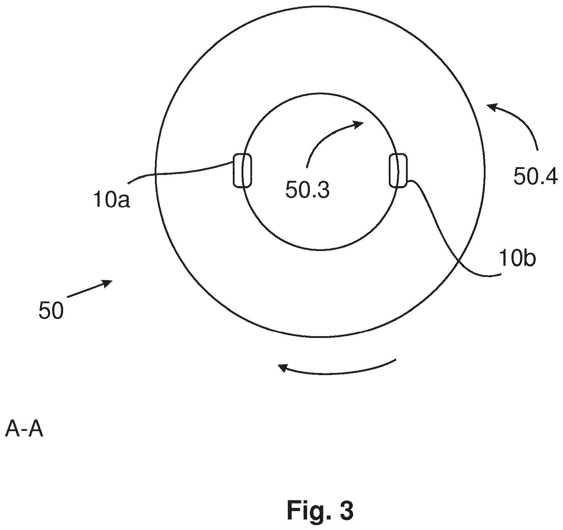

In Figur 3 ist schematisch eine Schnittansicht in der Schnittebene A-A gezeigt. Weiter ist eine Laufrichtung des Rads durch einen Pfeil gekennzeichnet. Insbesondere wird dabei unter einer Laufbindungsrichtung des Rads verstanden, dass diese Laufrichtung bei einer Vorwärtsbewegung des Fahrzeuges 1 eingehalten werden muss. Dies bedingt selbstverständlich eine Montage des Reifens 50 an einer vorgegebenen Position und/oder Seite am Fahrzeug 1, insbesondere mit einer vorgegebenen Ausrichtung.

Um Fahrzeuginformationen zu ermitteln, welche bspw. zur Überprüfung dieser Montage dienen, kann wenigstens eine Sensoreinheit 10 vorgesehen sein. In Figur 3 sind beispielhaft zwei Sensoreinheiten 10, d.h. eine erste Sensoreinheit 10a und eine zweite Sensoreinheit 10b, gezeigt. Die beiden Sensoreinheiten 10 sind dabei direkt am Reifen 50 an zwei gegenüberliegenden Seiten des Reifens 50 befestigt, insbesondere um einen Ausgleich einer Masseverteilung des Reifens 50 zu ermöglichen, sodass eine Unwucht am Reifen vermeidbar oder verringerbar ist. Insbesondere ist es dabei denkbar, dass die wenigstens eine Sensoreinheit 10 an einer Mantelinnenfläche 50.3 des Reifens 50 befestigt ist. Bspw. ist dabei die Mantelinnenfläche 50.3 felgenzugewandt und eine Mantelaußenfläche 50.4 des Reifens 50 felgenabgewandt und/oder fahrbahnzugewandt (bzw. in Kontakt mit der Fahrbahn bringbar).

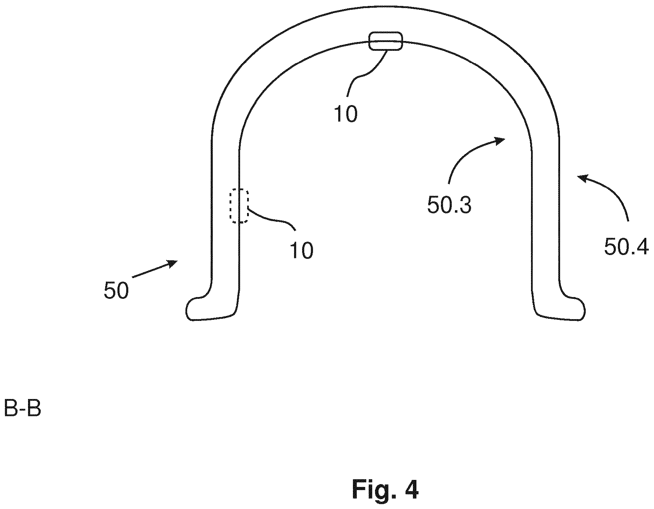

In Figur 4 ist schematisch eine weitere Schnittansicht durch die Schnittebene B-B gezeigt, wobei nur ein Teil des Reifens dargestellt ist. Dabei ist erkennbar, dass neben einer Sensoreinheit 10 an der Mantelinnenfläche 50.3 des Reifens 50 auch optional noch eine weitere Sensoreinheit 10, bspw. auch an einer anderen Position an der Mantelinnenfläche 50.3 des Reifens 50, angeordnet sein kann.

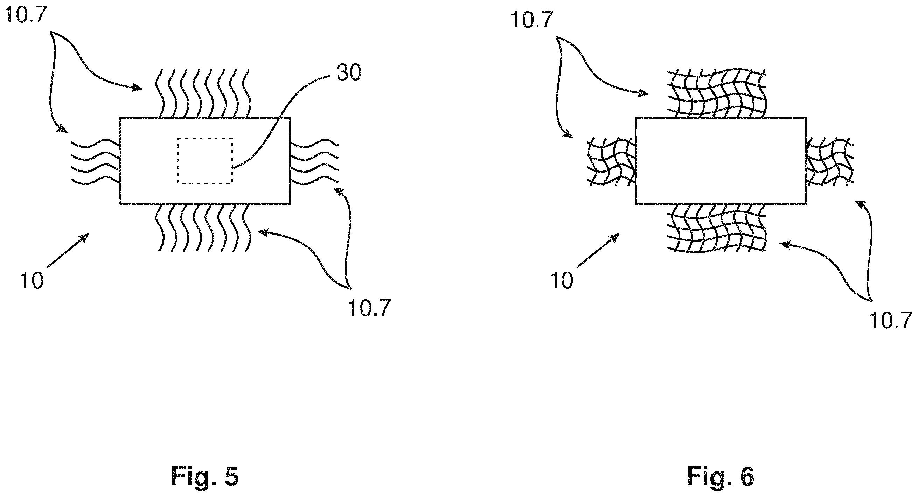

In Figur 5 ist schematisch eine Sensoreinheit 10 dargestellt. Dabei ist erkennbar, dass die Sensoreinheit 10 eine Übertragungsvorrichtung 30 aufweist, um bspw. Erfassungswerte der Sensoreinheit 10 an die Auswertevorrichtung 20 zu übertragen. Weiter kann es möglich sein, dass die Sensoreinheit 10 eine Befestigungsstruktur 10.7 umfasst, um so eine einfache Befestigung direkt an den Reifen 50 (bspw. durch Vulkanisation) zu ermöglichen. In Figur 5 ist diese Befestigungsstruktur 10.7 dabei faserartig ausgeführt und in Figur 6 beispielhaft gitterförmig ausgebildet. Es kann dabei möglich sein, dass die Befestigungsstruktur 10.7 gleichzeitig als Antenne für die Übertragungsvorrichtung 30 dient und somit elektrisch mit der Übertragungsvorrichtung 30 verbunden ist. Insbesondere dient damit die Befestigungsstruktur 10.7 auch zum Empfang und/oder zum Aussenden von elektromagnetischen Wellen (und/oder zur Erzeugung eines elektrischen und/oder magnetischen Feldes).

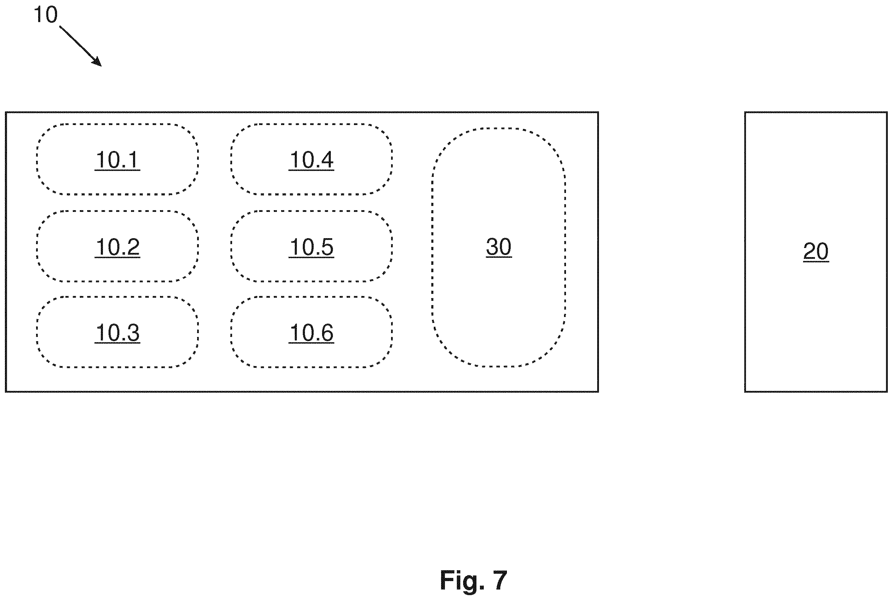

In Figur 7 ist schematisch ein Aufbau einer Sensoreinheit 10 eines erfindungsgemäßen Systems 200 gezeigt. Hierbei ist zu sehen, dass die Sensoreinheit 10 optional wenigstens ein Reifendrucksensorelement 10.1 und/oder wenigstens ein Beschleunigungssensorelement 10.2 und/oder wenigstens ein Drehsensorelement 10.3 und/oder wenigstens ein Temperatursensorelement 10.4 und/oder wenigstens einen Energiespeicher 10.5 und/oder wenigstens eine Ladezustandsvorrichtung 10.6 aufweisen kann. Die Sensorelemente können dabei bspw. als elektrische Komponenten der Sensoreinheit elektrisch zumindest teilweise miteinander verbunden sein und/oder auf einer Platine der Sensoreinheit angeordnet sein. Ebenfalls kann es möglich sein, dass die Sensorelemente elektrisch mit einer Übertragungsvorrichtung 30 der Sensoreinheit 10 verbunden sind, sodass Erfassungswerte der Sensorelemente durch die Übertragungsvorrichtung 30 an eine Auswertevorrichtung 20 übertragen werden können.

### Bezugszeichenliste

- 1: Fahrzeug

- 10: Sensoreinheit
- 10a: erste Sensoreinheit
- 10b: zweite Sensoreinheit
- 10.1: Reifendrucksensorelement
- 10.2: Beschleunigungssensorelement
- 10.3: Drehsensorelement
- 10.4: Temperatursensorelement
- 10.5: Energiespeicher
- 10.6: Ladezustandsvorrichtung
- 10.7: Befestigungsstruktur

- 20: Auswertevorrichtung

- 30: Übertragungsvorrichtung

- 50: Reifen
- 50.1: Innenseite
- 50.2: Außenseite
- 50.3: Mantelinnenfläche
- 50.4: Mantelaußenfläche
- 50a: erster Reifen
- 50b: zweiter Reifen
- 50c: dritter Reifen
- 50d: vierter Reifen

- 200: System

## Patentansprüche

1. System (200) zur Ermittlung wenigstens einer Fahrzeuginformation bei einem Fahrzeug (1), mit
- wenigstens einer Sensoreinheit (10), welche direkt an einem Reifen (50) für das Fahrzeug (1) befestigbar ist, sodass durch die wenigstens eine Sensoreinheit (10) wenigstens ein Erfassungswert ermittelbar ist, wobei der wenigstens eine Erfassungswert für wenigstens eine Erfassungsgröße am Reifen (50) spezifisch ist,
- wenigstens einer Auswertevorrichtung (20) zur Auswertung des wenigstens einen Erfassungswertes, sodass ein Auswertungsergebnis der Auswertung für die Fahrzeuginformation spezifisch ist,
wobei die Sensoreinheit (10) eine Übertragungsvorrichtung (30) aufweist, um den wenigstens einen Erfassungswert an die Auswertevorrichtung (20) zu übertragen, wobei die Sensoreinheit (10) als ein Reifendrucksensor ausgeführt ist, welcher ein Beschleunigungssensorelement (10.2) zur Erfassung einer Beschleunigung aufweist, wobei die wenigstens eine Sensoreinheit (10) richtungsgebunden am Reifen (50) angeordnet ist, sodass eine Fehlmontage des Reifens (50) am Fahrzeug (1) durch die Sensoreinheit (10) erfassbar ist
**dadurch gekennzeichnet, dass**
die Auswertevorrichtung (20) den wenigsten einen Erfassungswert auswertet, sodass ein Auswertungsergebnis der Auswertung für die Fahrzeuginformation spezifisch ist,
wobei anhand der Auswertung der Auswertevorrichtung (20) eine Reifenmontage bewertbar ist, und in Abhängigkeit von der Bewertung ein Warnhinweis ausgegeben wird, sodass bei fehlerhafter Montage der Reifen (50) am Fahrzeug (1) ein Benutzer des Fahrzeuges (1) auf die fehlerhafte Montage hingewiesen wird.

2. System (200) nach Anspruch 1,
**dadurch gekennzeichnet,**
**dass** die wenigstens eine Sensoreinheit (10) durch Vulkanisation direkt am Reifen (50), insbesondere an einem Reifenmantel, befestigt ist, vorzugsweise im Bereich einer Mantelinnenfläche (50.3) und/oder im Bereich einer Innenisolierung des Reifens (50), und/oder
**dass** die Übertragungsvorrichtung (30) zur Funkübertragung und/oder drahtlosen Übertragung ausgeführt ist und/oder
**dass** die Sensoreinheit (10) als ein Reifendrucksensor ausgeführt ist, welcher ein Beschleunigungssensorelement (10.2) zur Erfassung einer Beschleunigung, nämlich bei einer Drehbewegung eines Rads mit dem Reifen (50) und/oder bei einer Bewegung des Fahrzeuges (1), aufweist.

3. System (200) nach einem der vorhergehenden Ansprüche,
**dadurch gekennzeichnet,**
**dass** die wenigstens eine Sensoreinheit (10) dazu ausgeführt ist, wenigstens eine der nachfolgenden Erfassungen am Reifen (50) zur Ermittlung des wenigstens einen Erfassungswertes durchzuführen:
- Reifendruckerfassung, insbesondere durch wenigstens ein Reifendrucksensorelement (10.1) der Sensoreinheit (10),
- Beschleunigungserfassung, insbesondere durch wenigstens ein Beschleunigungssensorelement (10.2) der Sensoreinheit (10),
- Drehrichtungserfassung, insbesondere durch ein Drehsensorelement (10.3) und/oder ein Beschleunigungssensorelement (10.2) der Sensoreinheit (10),
- Drehwinkelerfassung, insbesondere durch ein Drehsensorelement (10.3) der Sensoreinheit (10),
- Fahrtrichtungserfassung, insbesondere durch ein Drehsensorelement (10.3) und/oder ein Beschleunigungssensorelement (10.2) der Sensoreinheit (10),
- Temperaturerfassung, insbesondere durch ein Temperatursensorelement (10.4) der Sensoreinheit (10),
- Vibrationserfassung, insbesondere durch ein Beschleunigungssensorelement (10.2) der Sensoreinheit (10).

4. System (200) nach einem der vorhergehenden Ansprüche,
**dadurch gekennzeichnet,**
**dass** die wenigstens eine Sensoreinheit (10) einen Energiespeicher (10.5) und eine Ladezustandsvorrichtung (10.6) umfasst, wobei die Ladezustandsvorrichtung (10.6) elektrisch mit dem Energiespeicher (10.5) verbunden ist, sodass ein unzureichender Ladezustand des Energiespeichers (10.5) durch die Ladezustandsvorrichtung (10.6) erfassbar und/oder an die Auswertevorrichtung (20) signalisierbar ist.

5. System (200) nach einem der vorhergehenden Ansprüche,
**dadurch gekennzeichnet,**
**dass** wenigstens zwei oder drei oder vier Sensoreinheiten (10) an jeweils unterschiedlichen Reifen (50) für das Fahrzeug (1) befestigt sind, sodass durch die jeweiligen Sensoreinheiten (10) für den jeweiligen Reifen (50) reifenspezifische Erfassungswerte ermittelbar und insbesondere durch die Auswertevorrichtung (20) auswertbar sind.

6. System (200) nach einem der vorhergehenden Ansprüche,
**dadurch gekennzeichnet,**
**dass** wenigstens zwei Sensoreinheiten (10) an einem einzigen Reifen (50) befestigt sind, insbesondere jeweils direkt am Reifen (50), vorzugsweise an zwei gegenüberliegenden Seiten des Reifens (50), bevorzugt zum Ausgleich einer Masseverteilung des Reifens (50), sodass eine Unwucht am Reifen (50) vermeidbar oder verringerbar ist, und/oder dass die wenigstens eine Sensoreinheit (10) unlösbar am Reifen (50) befestigt ist, insbesondere drehfest und/oder stoffschlüssig.

7. System (200) nach einem der vorhergehenden Ansprüche,
**dadurch gekennzeichnet,**
**dass** der Reifen (50) eine Laufrichtungsbindung aufweist, insbesondere ein laufrichtungsgebundenes Profil, aufweist, und/oder
**dass** der Reifen (50) ein asymmetrisches Profil aufweist, sodass der Reifen (50) für eine Montage am Fahrzeug (1) angepasst ist, bei welcher eine vorgegebene Innenseite (50.1) des Reifens (50) fahrzeugseitig und eine vorgegebene Außenseite (50.2) des Reifens (50) fahrzeugabgewandt angeordnet ist.

8. System (200) nach einem der vorhergehenden Ansprüche,
**dadurch gekennzeichnet,**
**dass** die wenigstens eine Sensoreinheit (10) eine Befestigungsstruktur (10.7), insbesondere eine Gitterstruktur und/oder Faserstruktur und/oder Netzstruktur, aufweist, wobei die Sensoreinheit (10) im Wesentlichen durch die Befestigungsstruktur (10.7) am Reifen (50) befestigbar und/oder montierbar ist.

9. System (200) nach einem der vorhergehenden Ansprüche,
**dadurch gekennzeichnet,**
**dass** eine Befestigungsstruktur (10.7) der wenigstens einen Sensoreinheit (10) als Antenne der Übertragungsvorrichtung (30) der Sensoreinheit (10) ausgeführt ist, insbesondere zur Übertragung des wenigstens einen Erfassungswertes, und vorzugsweise elektrisch mit wenigstens einer elektrischen Komponente der Sensoreinheit (10) verbunden ist.

10. System (200) nach einem der vorhergehenden Ansprüche,
**dadurch gekennzeichnet,**
**dass** die Übertragungsvorrichtung (30) wenigstens eine der nachfolgenden Kommunikationseinheiten zur Übertragung des wenigstens einen Erfassungswertes an die Auswertevorrichtung (20) umfasst:
- eine NFC-Kommunikationseinheit, sodass die Übertragung des wenigstens einen Erfassungswertes über eine NFC-Kommunikation erfolgt,
- eine Bluetooth-Kommunikationseinheit, sodass die Übertragung des wenigstens einen Erfassungswertes über Bluetooth erfolgt,
- eine Funk- und/oder WLAN-Kommunikationseinheit, sodass die Übertragung des wenigstens einen Erfassungswertes über Funk und/oder WLAN erfolgt,
- eine Mobilfunk-Kommunikationseinheit, sodass die Übertragung des wenigstens einen Erfassungswertes über eine Mobilfunkverbindung erfolgt.

11. Verfahren zur Ermittlung wenigstens einer Fahrzeuginformation bei einem Fahrzeug (1), mit wenigstens einer Sensoreinheit (10), welche direkt an einem Reifen (50) für das Fahrzeug (1) befestigt wird, wobei die Sensoreinheit (10) als ein Reifendrucksensor ausgeführt ist und richtungsgebunden am Reifen (50) angeordnet ist, welcher ein Beschleunigungssensorelement (10.2) zur Erfassung einer Beschleunigung aufweist, und wenigstens einer Auswertevorrichtung (20),
**wobei wenigstens die nachfolgenden Schritte durchgeführt werden:**
a) Ermitteln von wenigstens einem Erfassungswert durch die wenigstens eine Sensoreinheit (10), wobei der wenigstens eine Erfassungswert für wenigstens eine Erfassungsgröße am Reifen (50) spezifisch ist,
b) Übertragen des wenigstens einen Erfassungswertes an die Auswertevorrichtung (20),
c) Auswerten des wenigstens einen Erfassungswertes durch die Auswertevorrichtung (20), sodass ein Auswertungsergebnis der Auswertung für die Fahrzeuginformation spezifisch ist,
wobei anhand der Auswertung der Auswertevorrichtung (20) eine Reifenmontage bewertbar ist, und in Abhängigkeit von der Bewertung ein Warnhinweis ausgegeben wird, sodass bei fehlerhafter Montage der Reifen (50) am Fahrzeug (1) ein Benutzer des Fahrzeuges (1) auf die fehlerhafte Montage hingewiesen wird.

12. Verfahren nach einem der vorhergehenden Ansprüche,
**dadurch gekennzeichnet,**
**dass** durch die Auswertung der Auswertevorrichtung (20) anhand des wenigstens einen Erfassungswertes einer jeweiligen Sensoreinheit (10) eine Information über eine Beschleunigungs- und/oder Dreh- und/oder Fahrtrichtung des Reifens (50) bestimmt wird, an welchem die jeweilige Sensoreinheit (10) befestigt ist.

13. Verfahren nach einem der vorhergehenden Ansprüche,
**dadurch gekennzeichnet,**
**dass** bei der Auswertung der Auswertevorrichtung (20), insbesondere anhand einer Information über eine Beschleunigungs- und/oder Dreh- und/oder Fahrtrichtung wenigstens einer der Reifen (50) des Fahrzeuges (1), die Fahrzeuginformation bestimmt wird, wobei die Fahrzeuginformation für eine Anordnung der Reifen (50) am Fahrzeug (1) spezifisch ist, sodass eine Reifenmontage bewertbar ist.

14. Verfahren nach einem der vorhergehenden Ansprüche,
**dadurch gekennzeichnet,**
**dass** bei der Auswertung der Auswertevorrichtung (20) die Fahrzeuginformation, insbesondere eine Montageinformation der Reifen (50), mit einer Vorgabe verglichen wird, insbesondere mit einer vorgegebenen Reifenmontage, um insbesondere eine Bewertung der Reifenmontage durchzuführen.

15. Verfahren nach einem der Ansprüche 11-14,
**dadurch gekennzeichnet,**
**dass** ein System (200) nach einem der Ansprüche 1-10 betrieben wird.

## Claims

1. System (200) for determining at least one item of vehicle information in a vehicle (1), having
- at least one sensor unit (10) which can be fastened directly to a tire (50) for the vehicle (1), so that at least one detection value can be determined by the at least one sensor unit (10) , wherein the at least one detection value is specific for at least one detection variable on the tire (50) ,
- at least one evaluation device (20) for evaluating the at least one detection value , so that an evaluation result of the evaluation is specific to the vehicle information ,
the sensor unit (10) having a transmission device (30) in order to transmit the at least one detection value to the evaluation device (20) , the sensor unit (10) being designed as a tire pressure sensor which has an acceleration sensor element (10.2) for detecting an acceleration , the at least one sensor unit (10) being arranged on the tire (50) in a directionally fixed manner , so that an incorrect mounting of the tire (50) on the vehicle (1) can be detected by the sensor unit (10)
**characterized in that**
the evaluation device (20) evaluates the at least one detection value so that an evaluation result of the evaluation is specific to the vehicle information ,
wherein a tire mounting can be evaluated on the basis of the evaluation of the evaluation device (20) , and a warning is output as a function of the evaluation , so that if the tires (50) are mounted incorrectly on the vehicle (1) , a user of the vehicle (1) is notified of the incorrect mounting.

2. System (200) according to claim 1 ,
**characterized in that**
the at least one sensor unit (10) is attached directly to the tire (50) , in particular to a tire casing , by vulcanization , preferably in the region of an inner casing surface (50.3) and/or in the region of an inner insulation of the tire (50) , and/or
the transmission device (30) is designed for radio transmission and/or wireless transmission and/or
the sensor unit (10) is designed as a tire pressure sensor which has an acceleration sensor element (10.2) for detecting an acceleration , namely during a rotational movement of a wheel with the tire (50) and/or during a movement of the vehicle (1).

3. System (200) according to any one of the preceding claims ,
**characterized in that**
the at least one sensor unit (10) is designed to carry out at least one of the following detections on the tire (50) in order to determine the at least one detection value :
- tire pressure detection , in particular by at least one tire pressure sensor element (10.1) of the sensor unit (10) ,
- acceleration detection , in particular by at least one acceleration sensor element (10.2) of the sensor unit (10) ,
- detection of the direction of rotation , in particular by a rotation sensor element (10.3) and/or an acceleration sensor element (10.2) of the sensor unit (10) ,
- rotation angle detection , in particular by a rotation sensor element (10.3) of the sensor unit (10) ,
- detection of the direction of travel , in particular by a rotation sensor element (10.3) and/or an acceleration sensor element (10.2) of the sensor unit (10) ,
- temperature detection , in particular by a temperature sensor element (10.4) of the sensor unit (10),
- vibration detection , in particular by an acceleration sensor element (10.2) of the sensor unit (10).

4. System (200) according to any one of the preceding claims ,
**characterized in that**
the at least one sensor unit (10) comprises an energy store (10.5) and a state-of-charge device (10.6) , the state-of-charge device (10.6) being electrically connected to the energy store (10.5) , so that an insufficient state of charge of the energy store (10.5) can be detected by the state-of-charge device (10.6) and/or signalled to the evaluation device (20).

5. System (200) according to any one of the preceding claims ,
**characterized in that**
at least two or three or four sensor units (10) are fastened to respectively different tires (50) for the vehicle (1) , so that tire-specific detection values can be determined by the respective sensor units (10) for the respective tire (50) and , in particular , can be evaluated by the evaluation device (20).

6. System (200) according to any one of the preceding claims ,
**characterized in that**
at least two sensor units (10) are fastened to a single tire (50) , in particular in each case directly to the tire (50) , preferably on two opposite sides of the tire (50) , preferably in order to compensate for a mass distribution of the tire (50) , so that an imbalance on the tire (50) can be avoided or reduced , and/or
the at least one sensor unit (10) is non-releasably fastened to the tire (50) , in particular in a rotationally fixed and/or materially interlocking manner.

7. System (200) according to any one of the preceding claims ,
**characterized in that**
the tire (50) has a directional tread , in particular a directional tread , and/or
the tire (50) has an asymmetrical profile , so that the tire (50) is adapted for mounting on the vehicle (1) , in which a predetermined inner side (50.1) of the tire (50) is arranged on the vehicle side and a predetermined outer side (50.2) of the tire (50) is arranged facing away from the vehicle.

8. System (200) according to any one of the preceding claims ,
**characterized in that**
the at least one sensor unit (10) has a fastening structure (10.7) , in particular a grid structure and/or fiber structure and/or mesh structure , it being possible for the sensor unit (10) to be fastened and/or mounted on the tire (50) essentially by means of the fastening structure (10.7).

9. System (200) according to any one of the preceding claims ,
**characterized in that**
a fastening structure (10.7) of the at least one sensor unit (10) is designed as an antenna of the transmission device (30) of the sensor unit (10) , in particular for transmitting the at least one detection value , and is preferably electrically connected to at least one electrical component of the sensor unit (10).

10. System (200) according to any one of the preceding claims ,
**characterized in that**
the transmission device (30) comprises at least one of the following communication units for transmitting the at least one detection value to the evaluation device (20) :
- an NFC communication unit , such that the transmission of the at least one detection value is performed via NFC communication ,
- a Bluetooth communication unit, so that the transmission of the at least one detection value takes place via Bluetooth ,
- a radio and/or WLAN communication unit , so that the transmission of the at least one detection value takes place via radio and/or WLAN ,
- a mobile radio communication unit , so that the transmission of the at least one detection value takes place via a mobile radio connection.

11. Method for determining at least one item of vehicle information in a vehicle (1) , having at least one sensor unit (10) which is fastened directly to a tire (50) for the vehicle (1) , the sensor unit (10) being designed as a tire pressure sensor and being arranged in a directionally fixed manner on the tire (50) , which has an acceleration sensor element (10.2) for detecting an acceleration , and at least one evaluation device (20) ,
**wherein at least the following steps are performed** :
a) determining at least one detection value by the at least one sensor unit (10) , wherein the at least one detection value is specific for at least one detection variable on the tire (50) ,
b) transmitting the at least one detection value to the evaluation device (20) ,
c) evaluating the at least one detection value by the evaluation device (20) so that an evaluation result of the evaluation is specific to the vehicle information ,
wherein a tire mounting can be evaluated on the basis of the evaluation of the evaluation device (20) , and a warning is output as a function of the evaluation , so that if the tires (50) are mounted incorrectly on the vehicle (1) , a user of the vehicle (1) is notified of the incorrect mounting.

12. The method according to any one of the preceding claims ,
**characterized in that**
the evaluation of the evaluation device (20) determines , on the basis of the at least one detection value of a respective sensor unit (10) , information about an acceleration and/or rotation and/or travel direction of the tire (50) to which the respective sensor unit (10) is fastened.

13. The method according to any one of the preceding claims ,
**characterized in that**
the vehicle information is determined during the evaluation of the evaluation device (20), in particular on the basis of information about an acceleration and/or rotation and/or travel direction of at least one of the tires (50) of the vehicle (1) , the vehicle information being specific for an arrangement of the tires (50) on the vehicle (1) , so that a tire mounting can be evaluated.

14. The method according to any one of the preceding claims ,
**characterized in that**
during the evaluation of the evaluation device (20) , the vehicle information , in particular mounting information of the tires (50) , is compared with a specification , in particular with a specified tire mounting , in order, in particular, to carry out an evaluation of the tire mounting.

15. The method according to any one of claims 11-14 ,
**characterized in that**
a system (200) according to any one of claims 1-10 is operated.

## Revendications

1. Système (200) pour déterminer au moins une information de véhicule dans un véhicule (1) , comprenant
- au moins une unité de détection (10) qui peut être fixée directement sur un pneu (50) pour le véhicule (1) , de sorte qu'au moins une valeur de détection peut être déterminée par la au moins une unité de détection (10) , la au moins une valeur de détection étant spécifique pour au moins une grandeur de détection sur le pneu (50) ,
- au moins un dispositif d'évaluation (20) pour évaluer la au moins une valeur de détection , de sorte qu'un résultat d'évaluation de l'évaluation est spécifique à l'information de véhicule ,
dans lequel l'unité de capteur (10) présente un dispositif de transmission (30) pour transmettre l'au moins une valeur de détection au dispositif d'évaluation (20) , l'unité de capteur (10) étant réalisée sous la forme d'un capteur de pression de pneu qui présente un élément de capteur d'accélération (10.2) pour détecter une accélération , l'au moins une unité de capteur (10) étant disposée sur le pneu (50) de manière à être liée à la direction , de sorte qu'un montage erroné du pneu (50) sur le véhicule (1) peut être détecté par l'unité de capteur (10)
**caractérisé en ce que**
le dispositif d'évaluation (20) évalue la au moins une valeur de détection, de sorte qu'un résultat d'évaluation de l'évaluation est spécifique à l'information de véhicule,
un montage de pneu pouvant être évalué à l'aide de l'évaluation du dispositif d'évaluation (20), et un avertissement étant émis en fonction de l'évaluation, de sorte que, en cas de montage défectueux des pneus (50) sur le véhicule (1), un utilisateur du véhicule (1) est averti du montage défectueux.

2. Système (200) selon la revendication 1,
**caractérisé en ce que**
l'au moins une unité de capteur (10) est fixée par vulcanisation directement sur le pneu (50), en particulier sur une enveloppe de pneu, de préférence dans la zone d'une surface intérieure d'enveloppe (50.3) et/ou dans la zone d'une isolation intérieure du pneu (50), et/ou
**en ce que** le dispositif de transmission (30) est réalisé pour la transmission radio et/ou la transmission sans fil et/ou
**en ce que** l'unité de détection (10) est réalisée sous la forme d'un capteur de pression de pneu qui présente un élément de détection d'accélération (10.2) pour détecter une accélération , à savoir lors d'un mouvement de rotation d'une roue avec le pneu (50) et/ou lors d'un mouvement du véhicule (1).

3. Système (200) selon l'une quelconque des revendications précédentes,
**caractérisé en ce que**
l'au moins une unité de détection (10) est réalisée pour effectuer au moins l'une des détections suivantes sur le pneu (50) pour déterminer l'au moins une valeur de détection:
- Détection de la pression des pneus, en particulier par au moins un élément de capteur de pression des pneus (10.1) de l'unité de capteur (10),
- Détection d'accélération, en particulier par au moins un élément de capteur d'accélération (10.2) de l'unité de capteur (10),
- Détection du sens de rotation, en particulier par un élément capteur de rotation (10.3) et/ou un élément capteur d'accélération (10.2) de l'unité de capteur (10),
- Détection de l'angle de rotation, en particulier par un élément de capteur de rotation (10.3) de l'unité de capteur (10),
- Détection du sens de marche, notamment par un élément capteur de rotation (10.3) et/ou un élément capteur d'accélération (10.2) de l'unité de capteur (10),
- Détection de la température, notamment par un élément capteur de température (10.4) de l'unité de détection (10),
- Détection de vibrations, notamment par un élément de détection d'accélération (10.2) de l'unité de détection (10).

4. Système (200) selon l'une quelconque des revendications précédentes,
**caractérisé en ce que**
l'au moins une unité de détection (10) comprend un accumulateur d'énergie (10.5) et un dispositif d'état de charge (10.6), le dispositif d'état de charge (10.6) étant relié électriquement à l'accumulateur d'énergie (10.5), de sorte qu'un état de charge insuffisant de l'accumulateur d'énergie (10.5) peut être détecté par le dispositif d'état de charge (10.6) et/ou signalé au dispositif d'évaluation (20).

5. Système (200) selon l'une quelconque des revendications précédentes,
**caractérisé en ce que**
au moins deux ou trois ou quatre unités de capteur (10) sont fixées sur des pneus (50) respectivement différents pour le véhicule (1), de sorte que des valeurs de détection spécifiques au pneu peuvent être déterminées par les unités de capteur (10) respectives pour le pneu (50) respectif et peuvent être évaluées en particulier par le dispositif d'évaluation (20).

6. Système (200) selon l'une quelconque des revendications précédentes
**caractérisé en ce que**
au moins deux unités de capteur (10) sont fixées sur un seul pneu (50), en particulier chacune directement sur le pneu (50), de préférence sur deux côtés opposés du pneu (50), de préférence pour compenser une répartition de masse du pneu (50), de sorte qu'un déséquilibre sur le pneu (50) peut être évité ou réduit, et/ou **en ce que** l'au moins une unité de capteur (10) est fixée de manière inamovible au pneu (50), en particulier de manière solidaire en rotation et/ou par liaison de matière.

7. Système (200) selon l'une quelconque des revendications précédentes,
**caractérisé en ce que**
le pneu (50) présente une liaison au sens de la marche, en particulier un profil lié au sens de la marche, et/ou
**en ce que** le pneu (50) présente un profil asymétrique, de sorte que le pneu (50) est adapté à un montage sur le véhicule (1), dans lequel un côté intérieur (50.1) prédéterminé du pneu (50) est disposé du côté du véhicule et un côté extérieur (50.2) prédéterminé du pneu (50) est disposé du côté opposé au véhicule.

8. Système (200) selon l'une quelconque des revendications précédentes,
**caractérisé en ce que**
l'au moins une unité de capteur (10) présente une structure de fixation (10.7), en particulier une structure de grille et/ou une structure de fibres et/ou une structure de réseau, l'unité de capteur (10) pouvant être fixée et/ou montée sur le pneu (50) essentiellement par la structure de fixation (10.7).

9. Système (200) selon l'une quelconque des revendications précédentes,
**caractérisé en ce que**
une structure de fixation (10.7) de l'au moins une unité de détection (10) est réalisée sous forme d'antenne du dispositif de transmission (30) de l'unité de détection (10), en particulier pour la transmission de l'au moins une valeur de détection, et est de préférence reliée électriquement à au moins un composant électrique de l'unité de détection (10).

10. Système (200) selon l'une quelconque des revendications précédentes,
**caractérisé en ce que**
le dispositif de transmission (30) comprend au moins une des unités de communication suivantes pour la transmission de la au moins une valeur de détection au dispositif d'évaluation (20) :
- une unité de communication NFC, de sorte que la transmission de la au moins une valeur de détection s'effectue via une communication NFC,
- une unité de communication Bluetooth, de sorte que la transmission de la au moins une valeur de détection s'effectue via Bluetooth,
- une unité de communication radio et/ou WLAN, de sorte que la transmission de l'au moins une valeur de détection s'effectue par radio et/ou WLAN,
- une unité de communication mobile, de sorte que la transmission de l'au moins une valeur de détection s'effectue via une connexion mobile.

11. Procédé pour déterminer au moins une information de véhicule dans un véhicule (1) , comprenant au moins une unité de capteur (10) qui est fixée directement à un pneu (50) pour le véhicule (1) , l'unité de capteur (10) étant réalisée sous la forme d'un capteur de pression de pneu et étant disposée de manière directionnelle sur le pneu (50) , qui présente un élément de capteur d'accélération (10.2) pour détecter une accélération , et au moins un dispositif d'évaluation (20) ,
**dans lequel au moins les étapes suivantes sont effectuées** :
a) détermination d'au moins une valeur de détection par ladite au moins une unité de capteur (10), ladite au moins une valeur de détection étant spécifique à au moins une grandeur de détection sur le pneu (50) ,
b) transmission de la au moins une valeur de détection au dispositif d'évaluation (20),
c) l'évaluation de la au moins une valeur de détection par le dispositif d'évaluation (20), de sorte qu'un résultat d'évaluation de l'évaluation est spécifique à l'information de véhicule,
dans lequel un montage de pneu pouvant être évalué à l'aide de l'évaluation du dispositif d'évaluation (20), et un avertissement étant émis en fonction de l'évaluation , de sorte que , en cas de montage défectueux des pneus (50) sur le véhicule (1), un utilisateur du véhicule (1) est averti du montage défectueux.

12. Procédé selon l'une quelconque des revendications précédentes,
**caractérisé en ce que**
par l'évaluation du dispositif d'évaluation (20), à l'aide de l'au moins une valeur de détection d'une unité de capteur (10) respective, une information est déterminée sur une direction d'accélération et/ou de rotation et/ou de déplacement du pneu (50) sur lequel l'unité de capteur (10) respective est fixée.

13. Procédé selon l'une quelconque des revendications précédentes,
**caractérisé en ce que**
lors de l'évaluation du dispositif d'évaluation (20), en particulier à l'aide d'une information sur une direction d'accélération et/ou de rotation et/ou de déplacement d'au moins l'un des pneus (50) du véhicule (1), l'information sur le véhicule est déterminée, l'information sur le véhicule étant spécifique à un agencement des pneus (50) sur le véhicule (1), de sorte qu'un montage de pneus peut être évalué.

14. Procédé selon l'une quelconque des revendications précédentes,
**caractérisé en ce que**
lors de l'évaluation du dispositif d'évaluation (20), l'information de véhicule, en particulier une information de montage des pneus (50), est comparée à une consigne, en particulier à un montage de pneu prédéfini, pour effectuer en particulier une évaluation du montage de pneu.

15. Procédé selon l'une quelconque des revendications 11 à 14,
**caractérisé en ce qu'**
un système (200) est exploité selon l'une des revendications 1 à 10.
